# EUROPÄISCHE PATENTANMELDUNG

(11) **EP 1 754 639 A1**
(43) Veröffentlichungstag der Anmeldung: **21.02.2007**
(21) Anmeldenummer: 05018070.2
(22) Anmeldetag: 19.08.2005
(51) Int. Cl.: B60R 25/00

(54) **Sende-und/oder Empfangsanordnung**

(71) Anmelder: Delphi Technologies, Inc., Troy, MI 48007 (US)
(72) Erfinder: Hildebrand, Carsten, 42115 Wuppertal (DE)
(74) Vertreter: Manitz, Finsterwald & Partner GbR

(57) **Zusammenfassung**

Die Erfindung betrifft eine Sende- und/oder Empfangsanordnung für elektromagnetische Strahlung mit einer als Antenne oder als Teil hiervon verwendeten Fahrzeugtür, -klappe oder sonstigen Außenfläche eines Kraftfahrzeugs sowie die Verwendung einer Fahrzeugtür, -klappe oder sonstigen Außenfläche eines Kraftfahrzeugs als Antenne einer Sende- und/oder Empfangsanordnung für elektromagnetische Strahlung oder als Teil einer solchen Antenne.

## Beschreibung

Die Erfindung betrifft eine Sende- und/oder Empfangsanordnung für elektromagnetische Strahlung.

Bei Kraftfahrzeugen kommen drahtlose elektronische Identifikations- bzw. Zugangskontrollsysteme zum Einsatz, die als "Keyless Entry"-Systeme bezeichnet werden, bei denen zwischen einem benutzerseitigen Schlüssel, insbesondere einer tragbaren Chipkarte, und einer fahrzeugseitigen Baueinheit Daten, insbesondere in Form von Funksignalen, übertragen werden.

Beispielsweise können durch Drücken eines Knopfs auf dem Schlüssel die Fahrzeugtüren, der Kofferraum und der Tankverschluss des Kraftfahrzeugs verriegelt bzw. entriegelt werden (unidirektionale Datenübertragung). Darüber hinaus sind auch Systeme bekannt, bei denen die fahrzeugseitige Baueinheit ein Anfragesignal an den benutzerseitigen Schlüssel sendet, der mit einem Antwortsignal antwortet, woraufhin bei Berechtigung die Fahrzeugtüren entriegelt werden (bidirektionale Datenübertragung). Das Aussenden des Anfragesignals kann beispielsweise durch eine Betätigung eines Griffs einer Fahrzeugtür ausgelöst werden.

Mittels einer fahrzeugseitigen Baueinheit können zusätzlich oder alternativ aber auch am Kraftfahrzeug angebrachte Sensoren überwacht werden. Beispielsweise kann durch sog. Tire Pressure Monitoring-Systeme (TPMS) der Reifendruck des Kraftfahrzeugs kontaktlos überprüft werden.

Damit eine fahrzeugseitige Baueinheit drahtlos Daten von einem benutzerseitigen Schlüssel und/oder einem Sensor empfangen und/oder Daten an einen benutzerseitigen Schlüssel und/oder einen Sensor senden kann, wird eine Antenne benötigt, die mit der fahrzeugseitigen Baueinheit in Verbindung steht und üblicherweise in oder an einer Fahrzeugtür angebracht ist.

Jedoch hat sich herausgestellt, dass bei Verwendung bestimmter Frequenzen für die drahtlose Datenkommunikation die insbesondere von der fahrzeugseitigen Baueinheit gesendeten Signale durch die Fahrzeugtür zu stark abgeschirmt werden, um von der jeweils anderen Seite noch empfangen werden zu können.

Der Erfindung liegt daher die Aufgabe zugrunde, eine Sende- und/oder Empfangsanordnung für elektromagnetische Strahlung zu schaffen, die eine verbesserte drahtlose Datenkommunikation zwischen einem benutzerseitigen Schlüssel oder einem Sensor eines Kraftfahrzeugs und einer fahrzeugseitigen Baueinheit ermöglicht.

Die Lösung dieser Aufgabe erfolgt durch die Merkmale des Anspruchs 1 und insbesondere dadurch, dass eine Sende- und/oder Empfangsanordnung für elektromagnetische Strahlung eine als Antenne oder als Teil hiervon verwendete Fahrzeugtür, -klappe oder sonstige Außenfläche eines Kraftfahrzeugs umfasst.

Bei der erfindungsgemäßen Sende- und/oder Empfangsanordnung entspricht die Fahrzeugtür, -klappe oder sonstige Außenfläche der Antenne oder einem Teil hiervon, insbesondere einer Spule eines Antennen-Schwingkreises. Da die Fahrzeugtür, -klappe oder sonstige Außenfläche selbst die Antenne bzw. die Spule der Antenne darstellt, tritt keine Abschirmung von drahtlos von und/oder zu einer fahrzeugseitigen Baueinheit übermittelten Signalen auf. Darüber hinaus kann auf bislang verwendete Antennen verzichtet werden. Vielmehr übernimmt nun die Fahrzeugtür, -klappe oder sonstige Außenfläche diese Funktion, so dass gegenüber aus dem Stand der Technik bekannten Sende- und/oder Empfangsanordnungen ein Kostenvorteil erzielt werden kann.

Unter einer Fahrzeugklappe oder sonstigen Außenfläche ist beispielsweise eine Heckklappe, eine Kofferraumhaube, ein Kofferraumdeckel, eine Motorhaube oder ein Kotflügel zu verstehen.

Die erfindungsgemäße Sende- und/oder Empfangsanordnung kann insbesondere bei Keyless Entry-Systemen, sonstigen Keyless-Applikationen, aber auch bei allen Systemen, bei denen eine drahtlose Datenkommunikation mit einer fahrzeugseitigen Baueinheit stattfindet, zum Einsatz kommen.

Vorteilhafte Ausführungsformen der Erfindung sind auch in den Unteransprüchen, der Beschreibung sowie der Zeichnung angegeben.

Nach einer bevorzugten Ausführungsform der Erfindung liegt das eine Ende der Fahrzeugtür, -klappe oder sonstigen Außenfläche auf Massepotential. Unter dem an dieser Stelle und im Folgenden verwendeten Begriff "Ende" ist zu verstehen, dass die Fahrzeugtür, -klappe oder sonstige Außenfläche in etwa im Bereich des jeweiligen Endes auf Massepotential liegt, d.h. es muss sich hierbei nicht um einen äußersten Punkt der Fahrzeugtür, -klappe oder sonstigen Außenfläche handeln.

Besonders vorteilhaft ist es, wenn das eine Ende der Fahrzeugtür, -klappe oder sonstigen Außenfläche über einen der Fahrzeugtür, -klappe oder sonstigen Außenfläche zugeordneten Schließmechanismus, insbesondere einen Schließbolzen, oder über eine Befestigungsvorrichtung der Fahrzeugtür, -klappe oder sonstigen Außenfläche, insbesondere wenigstens ein Scharnier, mit der Karosserie des Kraftfahrzeugs verbunden ist. Da die Karosserie des Kraftfahrzeugs auf Massepotential liegt, kann hierdurch das eine Ende der Fahrzeugtür, -klappe oder sonstigen Außenfläche auf besonders einfache Weise auf Massepotential gelegt werden. Das jeweils andere Ende bildet bevorzugt keinen elektrischen Kontakt zwischen der Fahrzeugtür, -klappe oder sonstigen Außenfläche und der Karosserie des Kraftfahrzeugs aus.

Des Weiteren kann das andere Ende der Fahrzeugtür, -klappe oder sonstigen Außenfläche mittelbar, insbesondere über eine Abstimmschaltung für die Antenne und/oder über eine Spule einer Vorrichtung zur Ein- und/oder Auskopplung des Antennensignals und/oder zur Impedanzanpassung des Antennen-Schwingkreises an eine fahrzeugseitige Baueinheit, mit Masse, insbesondere der Karosserie des Kraftfahrzeugs, verbunden sein.

Vorzugsweise ist eine Abstimmschaltung für die Antenne vorgesehen. Hierdurch wird gewährleistet, dass der Antennen-Schwingkreis auf verschiedene Resonanzfrequenzen abstimmbar ist, so dass die Fahrzeugtür, -klappe oder sonstige Außenfläche für den Betrieb bei verschiedenen Frequenzen für die drahtlose Datenkommunikation, beispielsweise 125 kHz und 13,56 MHz, geeignet ist. Insbesondere können, beispielsweise von einer fahrzeugseitigen Baueinheit aus gesehen, gesendete Signale eine andere Frequenz als empfangene Signale aufweisen.

Zusätzlich oder alternativ kann eine Vorrichtung zur Ein- und/oder Auskopplung des Antennensignals und/oder zur Impedanzanpassung des Antennen-Schwingkreises an eine fahrzeugseitige Baueinheit vorgesehen sein. Hierdurch kann die Fahrzeugtür, -klappe oder sonstige Außenfläche durch eine fahrzeugseitige Baueinheit zum Senden angeregt und/oder empfangene Signale können einer die Signale auswertenden fahrzeugseitigen Baueinheit zugeführt werden.

Die Erfindung betrifft ferner die Verwendung einer Fahrzeugtür, -klappe oder sonstigen Außenfläche eines Kraftfahrzeugs als Antenne einer Sende- und/oder Empfangsanordnung für elektromagnetische Strahlung oder als Teil einer solchen Antenne.

Bevorzugt werden mehrere Fahrzeugtüren, -klappen und/oder sonstige Außenflächen des Kraftfahrzeugs jeweils als Antenne einer Sende- und/oder Empfangsanordnung für elektromagnetische Strahlung oder als Teil einer solchen Antenne verwendet. Mehrere Sende- und/oder Empfangsanordnungen sind bevorzugt unabhängig voneinander betreibbar.

Die Erfindung wird im Folgenden beispielhaft unter Bezugnahme auf die Zeichnung beschrieben. Es zeigen:
- Fig. 1: eine schematische Darstellung einer als Antenne verwendeten Fahrzeugtür eines Kraftfahrzeugs, und
- Fig. 2: ein Ersatzschaltbild der erfindungsgemäßen Sende- und/oder Empfangsanordnung von Fig. 1.

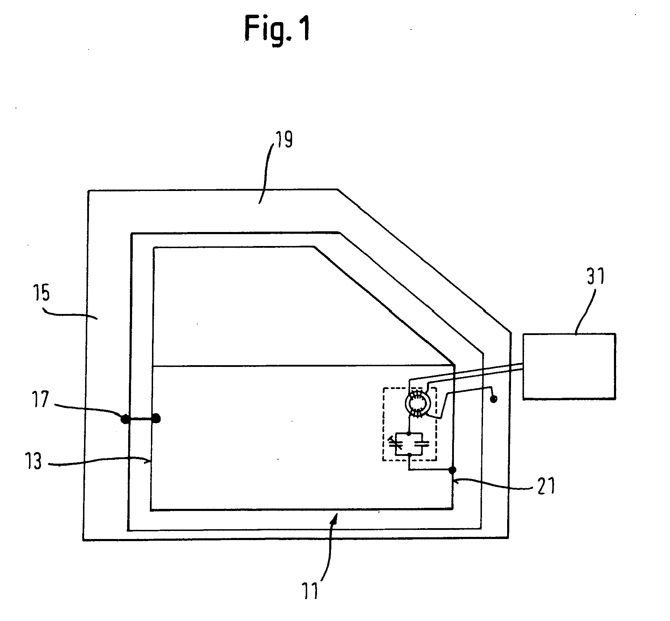

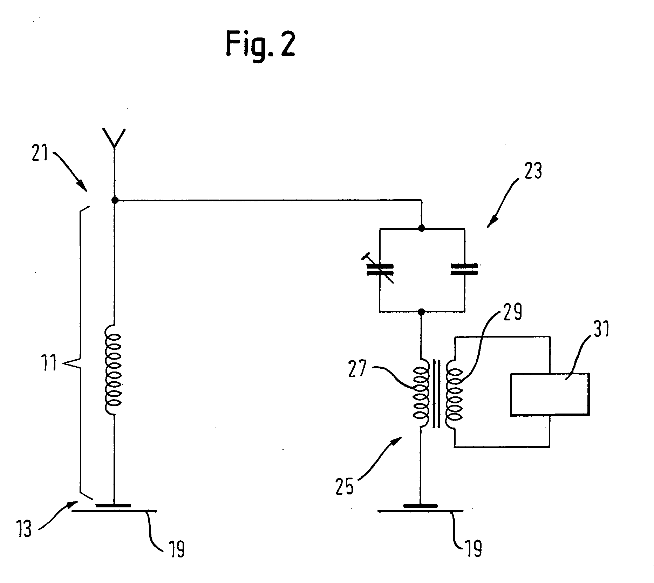

Die Fig. 1 und 2 zeigen eine erfindungsgemäße Sende- und/oder Empfangsanordnung für elektromagnetische Strahlung, bei der eine Fahrzeugtür 11 eines lediglich bereichsweise dargestellten Fahrzeugs als Antenne verwendet wird.

Hierfür ist einerseits das eine Ende 13 der Fahrzeugtür 11 bzw. des Türblatts 11, das das nicht dargestellte Türschloss trägt, über den der Fahrzeugtür 11 zugeordneten Schließbolzen 17, der am Türrahmen bzw. der Mittelsäule 15 und damit der Karosserie 19 des Kraftfahrzeugs angebracht ist, auf Massepotential gelegt. Andererseits ist das andere Ende 21 der Fahrzeugtür 11, an dem die nicht dargestellten Scharniere der Fahrzeugtür 11 angebracht sind, über eine Abstimmschaltung 23 für die Antenne 11 und eine Spule 27 eines induktiv gekoppelten Spulenpaars 25, das auch als Transformer bezeichnet wird, mit der Karosserie 19 des Kraftfahrzeugs, d.h. mit Masse, verbunden.

Die weitere Spule 29 des Spulenpaars 25 ist mit einer mikroprozessorgesteuerten fahrzeugseitigen Baueinheit 31 verbunden, die über die Fahrzeugtür 11 mit einer nicht dargestellten Sende- und/oder Empfangsvorrichtung, insbesondere einem benutzerseitigen Schlüssel, Daten austauscht. Durch das Spulenpaar 25, dessen Spulen 27, 29 jeweils auf einem gemeinsamen Eisen- oder Ferritkern aufgewickelt sind, kann das Antennensignal in den Antennen-Schwingkreis ein- und/oder aus diesem ausgekoppelt und über das Wicklungsverhältnis der beiden Spulen 27, 29 eine Impedanzanpassung des Antennen-Schwingkreises an die fahrzeugseitige Baueinheit 31 erreicht werden.

Die Abstimmschaltung 23 umfasst zwei parallel zueinander geschaltete Kondensatoren, wobei der eine Kondensator als verstimmbarer Drehkondensator ausgebildet ist, um den Antennen-Schwingkreis auf eine oder mehrere Frequenzen anzupassen, die für eine drahtlose Datenkommunikation zwischen der mit der Fahrzeugtür 11 gekoppelten fahrzeugseitigen Baueinheit 31 und der Sende- und/oder Empfangsvorrichtung verwendet werden.

### Bezugszeichenliste

- 11: Fahrzeugtür
- 13: Ende der Fahrzeugtür
- 15: Mittelsäule
- 17: Schließbolzen
- 19: Karosserie
- 21: Ende der Fahrzeugtür
- 23: Abstimmschaltung
- 25: Spulenpaar
- 27: Spule
- 29: Spule
- 31: fahrzeugseitige Baueinheit

## Patentansprüche

1. Sende- und/oder Empfangsanordnung für elektromagnetische Strahlung mit einer als Antenne oder als Teil hiervon verwendeten Fahrzeugtür (11), -klappe oder sonstigen Außenfläche eines Kraftfahrzeugs.

2. Sende- und/oder Empfangsanordnung nach Anspruch 1,
**dadurch gekennzeichnet,**
**dass** das eine Ende (13) der Fahrzeugtür (11), -klappe oder sonstigen Außenfläche auf Massepotential liegt.

3. Sende- und/oder Empfangsanordnung nach Anspruch 2,
**dadurch gekennzeichnet,**
**dass** das eine Ende (13) der Fahrzeugtür (11), -klappe oder sonstigen Außenfläche über einen der Fahrzeugtür (11), -klappe oder sonstigen Außenfläche zugeordneten Schließmechanismus, insbesondere einen Schließbolzen (17), oder über eine Befestigungsvorrichtung der Fahrzeugtür (11), -klappe oder sonstigen Außenfläche, insbesondere wenigstens ein Scharnier, mit der Karosserie (19) des Kraftfahrzeugs verbunden ist.

4. Sende- und/oder Empfangsanordnung nach einem der vorhergehenden Ansprüche,
**dadurch gekennzeichnet,**
**dass** das andere Ende (21) der Fahrzeugtür (11), -klappe oder sonstigen Außenfläche mittelbar mit Masse, insbesondere der Karosserie (19) des Kraftfahrzeugs, verbunden ist.

5. Sende- und/oder Empfangsanordnung nach einem der vorhergehenden Ansprüche,
**dadurch gekennzeichnet,**
**dass** eine Abstimmschaltung (23) für die Antenne (11) vorgesehen ist.

6. Sende- und/oder Empfangsanordnung nach einem der vorhergehenden Ansprüche,
**dadurch gekennzeichnet**,
eine Vorrichtung (25) zur Ein- und/oder Auskopplung des Antennensignals und/oder zur Impedanzanpassung des Antennen-Schwingkreises an eine fahrzeugseitige Baueinheit vorgesehen ist.

7. Verwendung einer Fahrzeugtür (11), -klappe oder sonstigen Außenfläche eines Kraftfahrzeugs als Antenne einer Sende- und/oder Empfangsanordnung für elektromagnetische Strahlung oder als Teil einer solchen Antenne.
